# EUROPEAN PATENT APPLICATION

(11) **EP 2 048 266 A1**
(43) Date of publication of application: **15.04.2009**
(21) Application number: 07118249.7
(22) Date of filing: 10.10.2007
(51) Int. Cl.: C25D 11/06, C25D 11/26, C25D 11/30, C09D 183/02, C23F 13/00

(54) **Corrosion protective layer**

(71) Applicant: Nederlandse Organisatie voor toegepast-natuurwetenschappelijk onderzoek TNO, 2628 VK Delft (NL)
(72) Inventor: The designation of the inventor has not yet been filed
(74) Representative: Hatzmann, Martin

(57) **Abstract**

The invention is directed to a corrosion protective layer, a process for providing an anodisable metal surface with a corrosion protective layer, a metal surface obtainable by such process, and the use thereof.
The invention provides a corrosion protective layer, comprising the metal in oxidised form and an X_{y}O_{z} network, wherein said layer is essentially free of hexavalent chromium, and wherein y is 1-3, z is 1-3, and X is chosen from the group consisting of Si, Al, Ti, Zr, Ce,Mo and Mg.

## Description

The invention is directed to a corrosion protective layer, a process for providing an anodisable metal surface with a corrosion protective layer, a metal surface obtainable by such process, and the use thereof.

Corrosion is an interaction between a material and its environment that results in a degradation of the physical, mechanical, and/or aesthetic properties of that material. Corrosion is usually associated with a change in the oxidation state of a metal, oxide, or semiconductor.

Corrosion can be prevented by excluding air and water from the metal surface, e.g. by painting, oiling, or greasing, or by plating the metal with a protective coating of another metal.

A well-known way of increasing the corrosion resistance of a metal is by coating the surface of the metal with an oxide layer by anodising. Anodising can also result in an increase of wear resistance. Anodising derives its name from the fact that the metal surface to be treated forms the anode portion of an electrical circuit in an electrolytic process. In particular, this process is often used for aluminium.

Most metals, when exposed to the atmosphere, form a natural passive oxide layer, which provides moderate protection against corrosion. This natural passive oxide layer is chemically bound to the metal surface. Aluminium in its pure form self-passivates very effectively. However, aluminium alloys are far more prone to atmospheric corrosion and therefore benefit from a protective coating, such as an anodising layer.

Typically the anodisation process involves the provision of an oxide layer by passing a DC current through a chromic acid solution (see US-A-4 690 736), with the metal object serving as the anode (the positive electrode). The current releases hydrogen at the cathode (the negative electrode) and oxygen at the surface of the anode, creating a build-up of oxide.

Anodisation using chromic acid produces thinner, more opaque films that are softer, ductile, and to a degree self-healing. However, the hexavalent chromium that ends up in the protective layer is hazardous for the environment. Most hexavalent chromium compounds are irritating to eyes, skin and mucous membranes. Chronic exposure to hexavalent chromium compounds can cause permanent eye injury, unless properly treated. In addition, hexavalent chromium is considered an established human carcinogen. The World Health Organization has recommended a maximum allowable concentration of hexavalent chromium in drinking water of 0.05 mg/l.

Nevertheless, hexavalent chromium is still widely used for aerospace refinishing applications, because of the resulting high degree of corrosion resistance. In particular in aerospace applications a high degree of corrosion resistance is required since the materials are exposed to a wide range of environmental conditions with extreme temperatures, high humidity, *etc.*

Anodising layers that lack hexavalent chromium typically provide insufficient corrosion protection when applied in thin layers, such as layers of 1-5 µm thick. In addition, the porous structure of the oxide layer provides a weak resistance to external chemical agents.

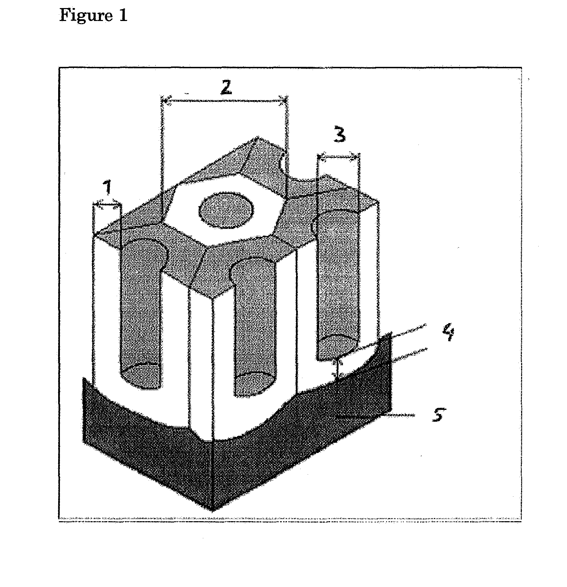

The anodising layers in general consist of a relatively thin continuous oxide layer of about 10-50 nm thick which is bound to the metal substrate. The thin oxide layer has oxide whiskers or finger-like projections of about 1-50 µm height, which stick out in the direction opposite to the metal substrate. These finger-like projections form hexagonal cells with a diameter of 200 nm and a pore diameter of about 50 nm. A schematic picture illustrating the situation is shown in Figure 1, wherein 1 is the cell wall thickness, 2 is the cell size, 3 is the pore diameter, 4 is the barrier layer and 5 is the aluminium substrate. The space between two adjacent whiskers or finger-like projections is about 200 nm.

It is desirable to design alternative processes for protection of metal surfaces from corrosion, which do not involve hexavalent chromium. It is furthermore desirable to design corrosion protective layers that can combine the corrosion protective property with other functionalities.

US-B-6 391465 proposes the application of a coating composition comprising (i) water; (ii) metal alkoxide comprising M(OR)ₓ, where R is an alkyl group; (iii) organoalkoxysilane comprising silane coupling functional groups capable of binding with the material to be bonded to the metal surface; and (iv) acid to promote hydrolysis and cross-linking of the metal alkoxide and organoalkoxysilane.

Disadvantages of protecting metal surfaces with sol-gel coatings include the complex bath chemistry that is accompanied with a sol-gel coating, and the often required application of a multilayer system in order to have sufficient corrosion protection. Furthermore, an after treatment with relatively high temperatures (> 150 °C) is required to provide a dense layer with satisfactory corrosion protection. In addition, it is very complicated to include additional functionalities to the sol-gel process and maintain sufficient corrosion protection.

US-A-4 549 910 describes a two-step process in which an anodised surface is post-treated with a sealing-solution in order to confer satisfactory resistance to external corrosive agents. The sealing solution comprises (i) inorganic ions selected from Ni²⁺, Co²⁺, and Zr²⁺ cations, F⁻, SiF₆²⁻, CrO₄²⁻, WO₄²⁻, and MoO₄²⁻ anions, and mixtures of those cations and anions, and (ii) a trialkoxysilane of formula X-(CH₂)_{y}-Si(OR)₃, in which X is a functional aminic group, OR is an alkoxy radical, and y is 1-3. A major disadvantage of this process is that it is a two-step process in which the metal is first anodised and subsequently sealed.

JP-A-11 117 078 describes a metal article with high energy reflectance. The metal article, comprising 50 % or more aluminium, is provided with a hardened coating film essentially consisting of silicon oxide and preferably prepared by an anodising treatment. The hardened coating film is either chemically bound to a silane coupling agent having a carbon fluoride group or is coated with a sol or a gel that contains molecules having a carbon fluoride group to form a water repellent coating. Accordingly, hardened coating film and the water repellent coating are applied in two different steps, which is a disadvantage.

Object of the invention is to provide an environment friendly corrosion protective layer essentially free from hexavalent chromium.

A further object of the invention is to provide a corrosion protective layer which combines the properties of an electrochemically formed oxide (by anodisation) with the functionalised surface properties of sol-gel coatings.

Another object of the invention is to provide a corrosion protective layer, which can be applied in a one-step process, thereby saving time and costs.

The inventors found that one or more of these objects can, at least partly, be met by combining an anodisation process with a sol-gel coating. It is surprising that these processes can be combined, because sol-gel coating and electrochemical oxide coatings are applied from solutions of different compositions and by different processing techniques. Sol-gel process solutions typically have a high content of alcohols, whereas electrochemical oxide processes are inherently purely water based.

In a first aspect the invention is directed to a corrosion protective layer for protecting an anodisable metal surface from corrosion, comprising the metal in oxidised form and an X_{y}O_{z} network, wherein said layer is essentially free from hexavalent chromium, and wherein y is 1-3, z is 1-3, and X is chosen from the group consisting of Si, Al, Ti, Zr, Ce, Mo and Mg.

The term "corrosion protective" as used herein is meant to refer to an increase in the corrosion resistance of the metal to which the layer is applied.

The term "essentially free from hexavalent chromium" as used herein is meant to refer to a chromium content of at most 0.2 mg/m², preferably 0.1 mg/m².

The metal can be any anodisable metal. Examples thereof include aluminium, magnesium, tantalum, titanium, beryllium, niobium, and alloys thereof. In a preferred embodiment the metal is aluminium.

The X_{y}O_{z} network is preferably an amorphous network formed by a sol-gel process. X is preferably Si. The index y can be in the range of 1-3. The index z can be in the range of 1-3.

No particular limit is required for the thickness of the layer. However, in practice the layer will not be thicker than 50 µm, preferably not thicker than 10 µm. If the layer is thinner than 1 µm, the corrosion protective effects will become very small, therefore the layer is preferably at least 1 µm thick, more preferably at least 3 µm.

In a further aspect the invention relates to a process for providing a metal surface with a corrosion protective layer, comprising electrochemically oxidising the metal in the presence of a mixture of a sol-gel precursor of an X_{y}O_{z} network, an alcohol and acidified H₂O, wherein y is 1-3, z is 1-3 and X is chosen from the group consisting of Si, Al, Ti, Zr, Ce, Mo and Mg.

This process can advantageously be applied to prepare the corrosion protective layers as described hereinabove.

The process of the invention is a one-step process, which saves time and costs. It allows a direct in situ reaction of the sol-gel precursor with the highly reactive metal oxide surface resulting in a strong bond between the sol-gel film and the metal oxide, which itself is strongly bound to the metal surface. The corrosion protective coating obtained by this process lacks the typical pores that are observed in conventional anodising layers. Accordingly, the corrosion protection improves. Furthermore, the process of the invention allows combining the properties of the electrochemically formed oxide, such as good metal surface adhesion, corrosion and wear resistance, with additionally introduced surface properties of functionalised sol-gel coatings, such as scratch resistance, UV absorption, low surface energy (no-stick). As a result, the obtained corrosion protected metal does not require a post-treatment, such as sealing at high temperatures or impregnation to introduce specific functional properties. Because the sol-gel coating is not mainly focussed on corrosion protection the use of *e.g.* multiple layer coatings and extensive high temperature post-treatments becomes redundant.

Examples of suitable sol-gel precursors of an X_{y}O_{z} network that is silicon based include silicon alkoxydes such as tetraethoxysilane, dimethylethoxysilane, methyltriethoxysilane, phenyltriethyxosilane, tetramethoxysilane, and methyltriethoxysilane. Examples of suitable sol-gel precursors of an X_{y}O_{z} network that is aluminium based include aluminium alkoxides such as aluminium ethoxide, aluminium isopropoxide, aluminium tertiary butoxide. Examples of suitable sol-gel precursors of an X_{y}O_{z} network that is titanium based include titanium alkoxides such as tetraethoxytitanate, phenyltriethoxytitanate, tetrapropoxytitanate, tetratisopropoxytitanate and tetrabutoxytitanate. Examples of suitable sol-gel precursors of an X_{y}O_{z} network that is magnesium based include magnesium alkoxides such as magnesium methoxide and magnesium ethoxide. Examples of suitable sol-gel precursors of an X_{y}O_{z} network that is zirconium based include zircononium alkoxides such as tetraethoxyzirconate, tetranpropoxyzirconate and tetraisopropoxyzirconate. Examples of suitable sol-gel precursors of an X_{y}O_{z} network that is cerium based include cerium alkoxides such as cerium ethoxide. Examples of suitable sol-gel sol-gel precursors of an X_{y}O_{z} network that is molybdene are molybdene alkoxides such as molybdene propoxide and molybdene butoxide.

In a preferred embodiment the sol-gel precursors are partially or fully halogenated, such as fluorinated. The term "fully halogenated" in this context means that all carbon bound hydrogen atoms are substituted with a halogen atom. Examples of such halogenated sol-gel precursors are halogen comprising alkoxides, such as fluoroalkylsilane. These sol-gel precursors are capable of providing the corrosion protective layer with additional advantageous properties such as make the surface easy-to-clean and/or water repellent.

In order to carry out the process of the invention the sol-gel precursor of the X_{y}O_{z} network and the alcohol can be mixed, preferably solved. The addition of acidified H₂O leads to a reaction with the sol-gel precursor to from a X_{y}O_{z} network.

Acidification of the H₂O is required for the simultaneous anodisation process. The pH of the acidified H₂O is preferably not higher than 3, because oxide dissolution becomes to low to obtain a porous anodic oxide film. A pH lower than -1 can have a negative influence on the stability of the sol-gel precursor that reacts with the X_{y}O_{z} network in the solution. Therefore, the pH of the acidified water is preferably in the range of -1 to 4, more preferably in the range of 1 to 3, even more preferably in the range of 1 to 2.

Preferably, the H₂O is acidified with an acid in which the metal can be anodised. Therefore, it is required that the acid has at least two protons available. Examples of such acids include diprotic acids (such as sulphuric acid, chromic acid and carbonic acid) and triprotic acids (such as phosphoric acid, boric acid, and citric acid).

According to the process of the invention, the metal surface is coated in the mixture of sol-gel precursor, alcohol and acidified H₂O by electrochemically oxidising. A cathode which is in electrical contact with the metal surface to be treated is placed in the mixture of sol-gel precursor, alcohol and acidified H₂O. The metal surface to be treated forms the anode portion of the electrical circuit. The electrochemical process is initiated by applying a voltage over the cathode and the anode. From a practical point of view, this voltage is preferably not more than 300 V, because at higher voltages destructive dielectrical breakdown of the oxide coatings occurs. If the voltage is lower than 5 V, then the driving force for anodisation is to low and an oxide layer of sufficient thickness cannot be formed. Typically, the applied voltage is therefore in the range of 10-200 V, preferably 10-50 V.

The anodic current density (the amount of current that is applied per unit of anodised area) during the electrochemical process of the invention is preferably in the range of 0.1-10 A/dm², preferably 0.5-5 A/dm². The anodic current density can be used to control the growth rate of the layer and thereby the resulting layer thickness. A low anodic current density results in a slow growth rate of the layer, while a high anodic current density leads to a high growth rate of the layer. This provides a convenient manner to control the layer structure.

The thickness of the corrosion protective layer obtained is determined by the duration of the process. If the process is carried out for a longer period of time, the thickness of the resulting layer will be thicker. Suitable layers are obtained when the process of the invention is carried out for a period of 3-30 minutes, preferably 5-15 for minutes. When this period has ended the metal surface can be withdrawn from the mixture.

The process of the invention can advantageously be carried out at relatively low temperatures. This allows the production of harder and/or thicker anodic oxide layers. Typically the temperature at which the process is carried out does not exceed 50 °C. Low temperatures require costly cooling. Accordingly, the process of the invention is preferably carried out at a temperature of 10-50 °C, more preferably at a temperature of 20-40 °C.

After completion of the process of the invention, the metal surface can be dried, preferably at elevated temperatures, such as temperatures above 50 °C, typically 100-150 °C. The treated metal surface may be dried for a period of 1-40 hours, preferably 12-20 hours.

In a preferred embodiment of the invention, the naturally occurring oxide layer of the metal has been removed prior to providing the metal surface with the corrosion protective layer. This removal can for instance be achieved by a prior etching treatment of the metal surface.

The inventors found that the corrosion protective layers resulting from the process of the invention are different from corrosion protective layers in which the metal surface has first been anodised and subsequently sol-gel coated. In particular, a difference was observed in the thickness of the layers and in the required anodising voltage.

Therefore, in yet a further aspect the invention is directed to a metal surface with corrosion protective layer obtainable by the process of the invention.

The invention produces a multifunctional metallic surface with new combinations of properties in a one-step process. This can advantageously be used for high added value metallic products, in particular for products that requiring multifunctional surfaces. Additional functional properties can be introduces by variances in the sol-gel precursors. As an example it is possible to render the surface of the corrosion protective layer hydrophobic by including a halogen (such as fluorine) comprising sol-gel precursor. In aerospace and automotive parts corrosion protection can be combined with adhesion to top coatings. The invention allows the combination of no-stick, easy-to-clean surfaces with wear resistance in appliances and clean room parts.

In a further aspect the invention is therefore directed to the use of a corrosion protective layer or a metal surface provided with a corrosion protective layer according to the invention in aerospace, automotive, manufacturing, solar cells or flexible displays.

### Example

### Coating types

Coatings were deposited using a coating bath of the composition shown in the table below. First, components 1 and 4 were mixed. After cooling, component 2 was slowly added under continuous cooling. After 1 hour refluxing at 60 °C component 5 was added.

| Component | | Composition / g |
|---|---|---|
| 1 | Ethylene glycol | 44 |
| 2 | Oxalic acid dihydrate | 8.3 |
| 3 | Water | 136.4 |
| 4 | TEOS (tetraethylorthosilicate) | 39 |
| 5 | F-TES (perfluorooctyltriethoxysilane) | 2.4 |

The table below shows the conditions used to deposited the coating of the invention and the various other reference coatings.

| Coating type | Composition | Temp | Current density or voltage | Time (min) | Withdrawal rate |
|---|---|---|---|---|---|
| A | components 1 to 5: | RT | 2 A/dm² | 5 | 8 mm/s |
| B | components 1 to 3: | RT | 2 A/dm² | 5 | - |
| C | components 1 to 4 | RT | - | - | 8 mm/s |
| D | 200 g/l sulphuric acid | 18°C | 2 A/dm² | 45 | - |
| E | 30 g/l chromic acid | 40°C | 0 to 40 V in 10 min; 40 V for 20 min; 40 to 50 V in 5 min; 50 V for 5 min | 40 | - |

All coatings were deposited on aluminium AA1050 panels that were appropriately cleaned and etched using standard methods. This gave the following coatings:

| ***Coating code*** | ***Description*** | Thickness / µm | Electrical energy consumption / MJ/m² |
|---|---|---|---|
| A | Coating of invention | 4 | 4 |
| B | Coating of invention anodic part only | 4 | 4 |
| C | Coating of invention: Sol-gel only | < 1 | - |
| D | Standard sulphuric acid anodised | 25 | 10 |
| E | Standard chromic acid anodised | 3 | 5 |

### Easy-to-clean surface

The cleaning efficiency of a surface is determined by its surface energy and the related contact angle. The higher the contact angle and the lower the surface energy the more difficult contaminants adhere to the surface and the more easy the surface can be cleaned. For the invention (A) the surface energy and contact angle are compared to a standard sulphuric acid (D) and the anodic oxide layer only of the invention (B) in the table below.

**Surface energy in water**

| | Contact angle / degrees | Surface energy / mN/m |
|---|---|---|
| A | 92 | 29 |
| B | 27 | 69 |
| D | 31 | 71 |

The surface energy of the coating of the invention is lower and correspondingly the contact angle is higher compared to an anodic part only coating, i.e. without the sol-gel component, and also compared to a standard sulphuric acid anodised coating.

This gives the coating of the invention an easy-to-clean functionality as shown for bacteria adhesion in the table below.

**Formation and release of E. coli bacteria**

| Coating type | *E. coli formation* / *RFU* | *E. coli release* / *RFU* |
|---|---|---|
| A | 10 000 | 3 000 |
| D | 13 000 | 4 000 |

The RFU is an indication for the amount of bacteria on the coated aluminium surface. After exposure to *E. coli* bacteria the RFU on coating A according to the invention is lower than on standard sulphuric acid anodised aluminium. Also after mechanical cleaning the surface the RFU on coating A remains lower. This shows that coating A has a lower affinity for contamination with bacteria than a sulphuric acid anodised coating.

Combined with the easy-to-clean functionality the coating of the invention also provides corrosion protection as shown for electrochemical impedance measurements in 3 wt.% NaCl given in the table below.

| | Corrosion potential / mV *vs.* Ag/AgCl | Barrier resistance after 100 h / MΩ cm² |
|---|---|---|
| A | - 300 | 90 |
| B | - 600 | 0.2 |
| C | - 600 | 0.05 |
| E | -150 | 200 |

After 100 hours exposure in 3 wt.% NaCl the corrosion potential of the coating of the invention is higher than that of the anodised only or sol-gel only coating. Also the barrier resistance, which is inversely related to corrosion rate, is much higher for the coating of the invention. This shows that the combination of the anodic layer and the sol-gel layer in the coating of the invention gives an improved corrosion protection compared to the single components. The coating of the invention even approaches the barrier protection offered by a chromic acid anodised layer after 100 hours exposure.

## Claims

1. Corrosion protective layer for protecting an anodisable metal surface from corrosion, comprising the metal in oxidised form and an X_{y}O_{z} network, wherein said layer is free of hexavalent chromium, and wherein y is 1-3, z is 1-3, and X is chosen from the group consisting of Si, Al, Ti, Zr, Ce, Mo and Mg.

2. Corrosion protective layer according to claim 1, wherein said metal is selected from the group consisting of aluminium, magnesium, tantalum, titanium, beryllium, niobium, and alloys thereof, preferably the metal is aluminium.

3. Corrosion protective layer according to claim 1 or 2, wherein X equals Si.

4. Corrosion protective layer according to any one of the preceding claims, wherein the thickness of the layer is 1-50 µm, preferably 3-10 µm.

5. Process for providing an anodisable metal surface with a corrosion protective layer, comprising electrochemically oxidising the metal in the presence of a mixture of a sol-gel precursor of a X_{y}O_{z} network, an alcohol and acidified H₂O, wherein x is 1-3, y is 1-3, and X is chosen from the group consisting of Si, Al, Ti, Zr, Ce, Mo and Mg.

6. Process according to claim 5, wherein the mixture of the sol-gel precursor of the XO₂ network, the alcohol and the acidified H₂O has a pH of -1 to 4, preferably 1 to 3.

7. Process according to claim 5 or 6, wherein the metal surface has been subjected to an acid etching pre-treatment for removing a thin naturally occurring oxide layer normally present on a metal surface.

8. Process according to any one of claims 5-7, wherein the metal is electrochemically oxidised at 10-50 °C, preferably at 20-40 °C.

9. Process according to any one of claims 5-8, wherein the metal is electrochemically oxidised with an anodic current density of 0.1-10 A/dm², preferably 0.5-5 A/dm².

10. Process according to any one of claims 5-9, wherein the metal is electrochemically oxidised with an anodising voltage of 5-100 V, preferably 10-50 V.

11. Process according to any one of claims 5-10, wherein the metal is electrochemically oxidised for 3-30 minutes, preferably 5-15 for minutes.

12. Process according to any one of claims 5-11, wherein the electrochemically oxidised metal is subsequently dried.

13. Process according to any one of claims 5-12, wherein the sol-gel precursor is tetraethoxysilane.

14. Process according to any one of claims 5-13, wherein the sol-gel precursor is partially or fully halogenated, such as fluorinated.

15. Metal surface with a corrosion protective layer obtainable by a process according to any one of claims 5-14.

16. Use of a corrosion protective layer according to any one of claims 1-4 or a metal surface provided with a corrosion protective layer according to claim 15 in aerospace, automotive, manufacturing, solar cells or flexible displays.
